# EUROPÄISCHE PATENTSCHRIFT

(11) **EP 1 926 582 B1**
(45) Veröffentlichungstag und Bekanntmachung des Hinweises auf die Patenterteilung: **16.05.2012**
(21) Anmeldenummer: 06793658.3
(22) Anmeldetag: 20.09.2006
(51) Int. Cl.: B29C 59/00, B29C 59/16, B29C 33/40, C14C 11/00, B44B 5/02, B44C 1/22

(54) **VERFAHREN ZUM ZURICHTEN VON LEDER**
METHOD FOR LEATHER FINISHING
PROCEDE DU FINISSAGE DE CUIR

(30) Priorität: 21.09.2005 DE 102005045047
(43) Veröffentlichungstag der Anmeldung: 04.06.2008
(73) Patentinhaber: BASF SE, 67056 Ludwigshafen (DE)
(72) Erfinder: TAEGER, Tilmann Lüdecke, 64342 Seeheim-Jugenheim (DE); KESSENICH, Elmar, 67071 Ludwigshafen (DE); SCHUTLZE, Klaus, 67227 Frankenthal (DE); SCHADEBRODT, Jens, 55129 Mainz (DE)
(86) Internationale Anmeldenummer: PCT/EP2006/066527
(87) Internationale Veröffentlichungsnummer: WO 2007/033968

(56) Entgegenhaltungen:
- EP-A1- 1 238 789
- EP-A2- 0 712 706
- EP-A2- 1 080 883
- WO-A-2005/047549
- DE-A1- 4 324 970
- DE-A1- 10 258 668

## Beschreibung

Die vorliegende Erfindung betrifft ein Verfahren zur Erzeugung von Matrizen für die Herstellung einer mit einem flächigen Träger, insbesondere einem Leder oder einem Textilmaterial, wie einem Vlies, Gewebe oder Gewirke, verbindbaren Beschichtung (Dekor-Zurichtungen), die durch Auftragen eines flüssigen Kunststoffmaterials auf die Oberfläche der Matrize und anschließender Verfestigung des Kunststoffmaterials gebildet wird. Die Erfindung betrifft weiterhin lasergravierte Matrizen, die nach dem Verfahren erhältlich sind.

Bei der Technik der Laser-Direktgravur wird in eine Materialoberfläche direkt eine dreidimensionale Struktur eingraviert. Breiteres wirtschaftliches Interesse hat diese Technik erst in den letzten Jahren mit dem Aufkommen von verbesserten Lasersystemen gewonnen. Zu den Verbesserungen bei den Lasersystemen zählen bessere Fokussierbarkeit des Laserstrahls, höhere Leistung sowie computergesteuerte Strahlführung.

Die Laser-Direktgravur weist gegenüber konventionellen, z.B. mechanischen Strukturierungsverfahren, mehrere Vorteile auf. Beispielsweise lassen sich dreidimensionale Motivelemente bei der Lasergravur-Technik individuell gestalten. Bestimmte Elemente können z.B. bezüglich Tiefe und Steilheit anders aufgebaut werden als andere Elemente. Weiterhin lässt sich mittels der Lasergravur-Technik prinzipiell jede digitale Motivvorlage nach geeigneter Umsetzung in ein dreidimensionales Reliefbild in eine Materialoberfläche gravieren, während bei konventionellen Strukturierungstechniken die dreidimensionale Form von Elementen entweder durch eine natürliche dreidimensionale Vorlage oder die Geometrie des abbildenden Werkzeugs beschränkt ist. Schließlich ist der Prozess der Lasergravur hochgradig automatisierbar, so dass der Gesamtprozess weniger anfällig gegen individuelle Fehler ist und sehr gut reproduzierbar ist. Auf diese Weise können strukturierte Materialien in hoher gleichbleibender Qualität hergestellt werden.

EP-A 0 640 043 und EP-A 0 640 044 offenbaren einschichtige bzw. mehrschichtige elastomere lasergravierbare Aufzeichnungselemente zur Herstellung von Flexodruckplatten. Die Elemente bestehen aus verstärkten elastomeren Schichten. Zur Herstellung der Schicht werden elastomere Bindemittel, insbesondere thermoplastische Elastomere, wie SBS-, SIS- oder SEBS-Blockcopolymere eingesetzt. Durch die so genannte Verstärkung wird die mechanische Festigkeit der Schicht erhöht, um Flexodruck zu ermöglichen. Die Verstärkung wird entweder durch Einbringen geeigneter Füllstoffe, fotochemische oder thermochemische Vernetzung oder Kombinationen davon erreicht.

DE-A 43 24 970 offenbart eine Prägewalze zum kontinuierlichen Prägen der Oberfläche einer thermoplastischen Folie. Dabei wird von der Oberfläche einer Mustervorlage eine endlose Positivform erzeugt, auf die eine Schicht Silikonkautschuk aufgegossen und zu einer Prägetochter vulkanisiert, von der Positivform abgezogen und mit der negativen Prägeoberfläche nach außen auf die Umfangsfläche der Prägewalze aufgeklebt. Zur Erzeugung der endlosen Positivform wird die Oberfläche der Mustervorlage mechanisch oder optisch abgetastet und das Muster durch einen Laserstrahl in die Oberfläche des Materials der Walze eingraviert.

EP-A 1 238 789 offenbart ein Verfahren zur Herstellung einer Prägewalze aus Silikonkautschuk zum kontinuierlichen Prägen der Oberfläche einer thermoplastischen Folie. Es wird zunächst eine Hilfswalze hergestellt, auf deren glatte Kunststoffoberfläche ein Laserstrahl gerichtet und in Übereinstimmung mit der Oberflächenstruktur einer reellen oder imaginären, als Daten vorliegenden Mustervorlage gesteuert wird, so dass die Oberflächenstruktur der Mustervorlage als Positivform in der Umfangsfläche der Hilfswalze erzeugt wird. Auf diese Umfangsfläche der Hilfswalze wird eine Schicht aus Silikonkautschuk aufgegossen, zu einer Prägetochter vulkanisiert, von der Umfangsfläche abgezogen und mit der negativ strukturierten Prägeoberfläche nach außen auf die Umfangsfläche einer Prägewalze aufgeklebt.

EP-A 0 712 706 offenbart ein Verfahren zur Herstellung einer Prägewalze zum kontinuierlichen Prägen der Oberfläche einer thermoplastischen Folie. Dabei wird zunächst eine Walze hergestellt, welche im Bereich ihrer Umfangsfläche aus Silikongummi besteht, und mittels eines bewegten Laserstrahls die Oberflächenstruktur einer Mustervorlage als Negativform in der Außenfläche der Walze erzeugt.

DE-A 102 58 668 offenbart ein Verfahren zur Herstellung von Flexodruckformen mittels Lasergravur, bei dem das Druckrelief in die vernetzte reliefbildende Schicht mit Hilfe eines zwischen 3000 und 12.000 nm emittierenden Lasers eingraviert wird, wobei die Tiefe der eingravierten Reliefelemente mindestens 0,03 mm beträgt.

EP-A 1 080 883 offenbart ein Silikonkautschuk und Eisenoxide enthaltendes Aufzeichnungsmaterial zur Herstellung von Reliefdruckplatten mittels Lasergravur.

In WO 2005/047549 ist ein Verfahren zur Herstellung einer Zurichtung für Leder beschrieben, bei dem die Zurichtung auf einer Unterlage aus Silikonkautschuk hergestellt wird, wobei die Unterlage eine der Narbenstruktur der Zurichtung entsprechende strukturierte Oberfläche aufweist. Ferner ist ein Verfahren zur Herstellung eines an seiner Sichtseite mit einer eine Narbenstruktur aufweisenden Zurichtung versehenen Trägers, insbesondere eines Narbenleders, eines Spaltleders mit geschliffener Oberseite oder eines synthetischen Veloursmaterials mit einer aus Mikrofasern bestehenden Oberseite, offenbart, wobei zunächst zur Bildung der Zurichtung eine wässrige Kunststoffdispersion auf eine aus Silikonkautschuk bestehende Unterlage, welche eine der Narbenstruktur der Zurichtung entsprechende strukturierte Oberfläche aufweist, aufgebracht und zu einem Film verfestigen gelassen wird.

Aufgabe der Erfindung ist es, ein Verfahren zur Herstellung von oberflächenstrukturierten Dekor-Zurichtungen wie Zurichtungen zum Beschichten von Leder bereitzustellen, wobei die heutigen hohen Anforderungen an solche Beschichtungen bezüglich Wasserpermeabilität, Echtheit und Abriebbeständigkeit erfüllt werden. Insbesondere die Bereitstellung eines geeigneten Verfahrens zur Herstellung von Beschichtungen, die den hohen Anforderungen der Automobilindustrie an Echtheit und Haptik für die Innenausstattung genügen, ist eine wesentliche Aufgabe der Erfindung.

Gelöst wird die Aufgabe durch ein Verfahren gemäß Anspruch 1. Die Herstellung der Matrizen für die Herstellung der mit einem flächigen Träger aus einem Leder verbindbaren oberflächenstrukturierten Beschichtung erfolgt durch Auftragen eines flüssigen Kunststoffmaterials auf die Oberfläche der Matrizen und anschließender Verfestigung des Kunststoffmaterials, wobei die Matrizen eine der Oberflächenstruktur der Beschichtung entsprechende Oberflächenstruktur aufweisen, und diese Oberflächenstruktur der Matrizen durch Lasergravur erzeugt wird. Hierzu weisen die Matrizen eine lasergravierbare Schicht auf. Von besonderem Vorteil ist der Prozess der Laserstrukturierung auch, da sich sehr leicht Logos, Warenzeichen, latente Bilder oder Design-Elemente in die technisch notwendigen Oberflächenstrukturierung bereits auf digitaler Ebene einbinden und in einem Arbeitsgang erzeugen lassen.

Im Allgemeinen ist die lasergravierbare Schicht eine Polymerschicht. Diese kann auf einem Träger vorliegen. Voraussetzung zur Herstellung der Matrizen mittels Lasergravur ist, dass die Laserstrahlung von der Polymerschicht absorbiert wird. Ferner ist eine bestimmte Schwellenenergie des Laserstrahls, die in die Polymerschicht eingebracht werden muss, erforderlich, damit im Regelfalle eine Lasergravur möglich ist. Die Absorption der Aufzeichnungsschicht für die gewählte Laserstrahlung sollte möglichst hoch sein (typischerweise beträgt die mittlere Leistungsdichte >12 kW/cm² bei einem Fokusdurchmesser von 100 µm).

Bei der Laserstrukturierung der Polymerschichten müssen große Mengen an Material abgetragen werden. Es sind daher leistungsstarke Laser bevorzugt. Zur Laserstrukturierung können beispielsweise CO₂-Laser mit einer Wellenlänge von 10640 nm eingesetzt werden. Es sind sehr leistungsstarke CO₂-Laser kommerziell erhältlich. Viele Polymere absorbieren im Regelfalle Strahlung mit einer Wellenlänge im Bereich um die 10 µm. Sie lassen sich somit gut mit CO₂-Lasern gravieren. Zur Laserstrukturierung der Polymerschichten können ferner Festkörperlaser mit Wellenlängen um ca. 1 µm eingesetzt werden. Beispiele sind leistungsstarke Nd/YAG-Laser mit einer Wellenlänge von 1064 nm. Nd/YAG-Laser weisen gegenüber CO₂-Laser den Vorteil auf, dass aufgrund der deutlich kürzeren Wellenlänge erheblich höhere Auflösungen möglich sind, somit also deutlich feinere Strukturen in die Oberfläche der Matrizen eingraviert werden können. Viele Polymere absorbieren die Wellenlänge von Festkörperlasern nicht oder nur in geringem Maße. Der lasergravierbaren Polymerschicht können dann zur Erhöhung der Empfindlichkeit IR-Strahlung absorbierende Substanzen beigemischt werden. Beim Einsatz von Nd/YAG-Lasern wird die Gravur durch den Einsatz von IR-Absorbern häufig erst ermöglicht, während beim Einsatz von CO₂-Laser die Geschwindigkeit der Gravur erhöht werden kann. Geeignete Absorber umfassen stark gefärbte Pigmente wie Ruß oder IR absorbierende Farbstoffe, die üblicherweise stark farbig sind.

Zum Eingravieren der Oberflächenstruktur wird die lasergravierbare Schicht relativ zu dem Laser bzw. dem den Laserstrahl oder Laserpuls emittierenden Bauteil des Lasers (nachfolgend auch abkürzend mit "Laser" bezeichnet) bewegt und der Laser entsprechend der Bewegung elektronisch moduliert, wodurch das gewünschte Muster erzeugt wird.

Beispielsweise kann die lasergravierbare Schicht oder ein geeigneter Schichtverbund auf einen Zylinder aufgebracht und der Zylinder in Rotation versetzt werden, und der Zylinder in axialer Richtung bewegt und der Laser entsprechend der Bewegung des Zylinders elektronisch gesteuert moduliert werden. Es können aber auch die lasergravierbare Schicht bzw. der Schichtverbund plan angeordnet werden und lasergravierbare Schicht und Laser in der Ebene der Schicht bzw. des Schichtverbundes relativ zueinander bewegt werden, und der Laser entsprechend der Relativbewegung elektronisch gesteuert moduliert werden.

In einer bevorzugten Ausführungsform umfasst das erfindungsgemäße Verfahren die Schritte:
a) Bereitstellen einer lasergravierbaren elastomeren Schicht oder eines Schichtverbunds umfassend eine lasergravierbare elastomere Schicht, gegebenenfalls auf einem Träger, wobei die lasergravierbare Schicht ein Bindemittel sowie weitere Zusatz- und Hilfsstoffe umfasst,
b) thermochemische, photochemische oder aktinische Verstärkung der lasergravierbaren elastomeren Schicht,
c) Eingravieren der der Oberflächenstruktur der oberflächenstrukturierten Beschichtung entsprechenden Oberflächenstruktur der Matrize in die lasergravierbare elastomere Schicht mit einem Laser.

Die lasergravierbare Schicht oder der Schichtverbund können auf einem Träger vorliegen, üblicher Weise liegen sie auf einem Träger vor. Beispiele für geeignete Träger umfassen Gewebe und Folien aus Polyethylenterephthalat (PET), Polyethylennaphthalat (PEN), Polybutylenterephthalat, Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und geeigneten polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder Eisenlegierungen.

Der Träger kann zur besseren Haftung der lasergravierbaren Schicht optional mit einer Haftschicht beschichtet sein.

Die lasergravierbare Schicht umfasst mindestens ein Bindemittel, das auch ein Präpolymer sein kann, welches im Zuge einer thermochemischen Verstärkung zu einem Polymer reagiert. Geeignete Bindemittel werden vom Fachmann je nach den gewünschten Eigenschaften der lasergravierbaren Schicht bzw. der Matrize, beispielsweise im Hinblick auf Härte, Elastizität oder Flexibilität ausgewählt. Geeignete Bindemittel lassen sich im Wesentlichen in 3 Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3-Dien-Monomere wie Isopren oder Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Polymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z.B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren.. Die Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton^{®} im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex^{®} erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche elastomeren Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR)O-, - Si(RR')O-, -OH, -NH₂, -NHR, -COOH, -COOR, -COHN₂, -O-C(O)NHR, -SO₃H oder - CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplatisch elastomere Polyester.

Selbstverständlich können auch elastomere Bindemittel eingesetzt werden, die sowohl über ethylenisch ungesättigte Gruppen wie über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere bzw. Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke.

Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Es können selbstverständlich auch Gemische zweier oder mehrerer Bindemittel eingesetzt werden, wobei es sich dabei sowohl um Bindemittel aus jeweils nur einer der geschilderten Gruppen handeln kann oder auch um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

Die Menge des oder der elastomeren Bindemittel in der elastomeren Schicht beträgt üblicherweise 30 Gew.-% bis 99 Gew.-% bezüglich der Summe aller Bestandteile, bevorzugt 40 bis 95 Gew.-%, und ganz besonders bevorzugt 50 bis 90 Gew.-%.

Optional kann die lasergravierbare Polymerschicht auch noch reaktive niedermolekulare oder oligomere Verbindungen umfassen. Oligomere Verbindungen weisen im Allgemeinen ein Molekulargewicht von nicht mehr als 20 000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von elastomeren Bindemitteln aus der ersten und zweiten Gruppe ist der Zusatz von Monomeren zur Beschleunigung im Allgemeinen nicht zwingend notwendig. Bei elastomeren Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt geeigneter Monomerer nicht weniger als 150°C. Besonders geeignet sind Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen Butylacrylat, 2-Ethylhexylacrylat, Laurylacrylat, 1,4-Butandioldiacrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4-Butandiol, 1,6-Hexandiol, 1,8-Octandiol, 1,9-Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen ω-Hydroxyalkylacrylate genannt, wie beispielsweise Ethylenglykolmono(meth)acrylat, 1,4-Butandiolmono(meth)acrylat oder 1,6-Hexandiolmono(meth)acrylat.

Selbstverständlich können auch Gemische verschiedener Monomerer eingesetzt werden, vorausgesetzt die Eigenschaften der elastomeren Schicht werden durch die Mischung nicht negativ beeinflusst. Im Regelfalle beträgt die Menge zugesetzter Monomere 0 bis 40 Gew.-% bezüglich der Menge aller Bestandteile der Aufzeichnungsschicht, bevorzugt 0 bis 20 Gew.-%.

Die elastomere lasergravierbare Schicht kann weiterhin auch noch Zusatzstoffe und Hilfsstoffe wie beispielsweise IR-Absorber, Farbstoffe, Dispergierhilfsmittel, Antistatika, Weichmacher oder abrasive Partikel umfassen. Die Menge derartiger Zusätze sollte im Regelfalle aber 30 Gew.-% bezüglich der Menge aller Komponenten der elastomeren Schicht nicht überschreiten.

Die lasergravierbare Schicht kann auch aus mehreren Einzelschichten aufgebaut werden. Diese Teilschichten können von gleicher, in etwa gleicher oder von unterschiedlicher stofflicher Zusammensetzung sein. Die Dicke der lasergravierbaren Schicht bzw. aller Einzelschichten zusammen beträgt im Regelfalle zwischen 0,1 und 10 mm, bevorzugt 0,5 bis 3 mm. Die Dicke wird vom Fachmann abhängig von anwendungstechnischen und maschinentechnischen Prozessparametern des Lasergravurvorgangs und des Abformvorgangs geeignet gewählt.

Die lasergravierbare Schicht kann optional weiterhin noch eine Oberschicht mit einer Dicke von nicht mehr als 300 µm aufweisen. Die Zusammensetzung einer solchen Oberschicht kann im Hinblick auf optimale Gravierbarkeit und mechanische Stabilität ausgewählt werden, während die Zusammensetzung der darunterliegenden Schicht im Hinblick auf optimale Härte oder Elastizität ausgewählt wird. Die Oberschicht muss entweder selbst lasergravierbar sein, oder zumindest im Zuge der Lasergravur zusammen mit der darunter liegenden Schicht entfernbar sein. Sie umfasst mindestens ein polymeres Bindemittel. Sie kann weiterhin einen Absorber für Laserstrahlung oder auch Monomere oder Hilfsmittel umfassen.

Das Ausgangsmaterial für das Verfahren kann beispielsweise durch Lösen bzw. Dispergieren aller Komponenten in einem geeigneten Lösemittel und Aufgießen auf einen Träger hergestellt werden. Bei mehrschichtigen Elementen können in prinzipiell bekannter Art und Weise mehrere Schichten aufeinander gegossen werden. Wenn "nass-in-nass" gearbeitet wird, verbinden sich die Schichten gut miteinander. Auch eine Oberschicht kann aufgegossen werden. Alternativ können die Einzelschichten beispielsweise auf temporäre Träger gegossen und die Schichten anschließend durch Kaschieren miteinander verbunden werden. Nach dem Gießen kann noch optional eine Deckfolie zum Schutz vor Beschädigungen des Ausgangsmaterials aufgebracht werden.

Von ganz besonderem Vorteil werden für das erfindungsgemäße Verfahren aber thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 084 851 offenbart. Auf diese Art und Weise lassen sich auch dickere Schichten in einem einzigen Arbeitsgang herstellen. Mehrschichtige Elemente können mittels Coextrusion hergestellt werden.

Die lasergravierbaren Schicht wird vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon verstärkt.

Anschließend wird die Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit einem flächigen Träger aus Leder verbindbare Beschichtung direkt durch Auftragen eines flüssigen Kunststoffmaterials auf die Oberfläche der Matrize und anschließender Verfestigung des Kunststoffmaterials erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit dem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

In die Matrize werden Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

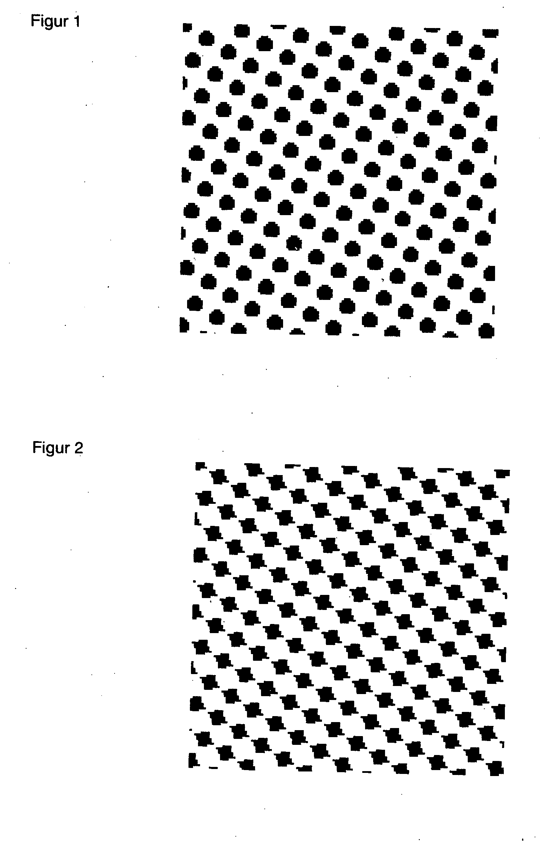

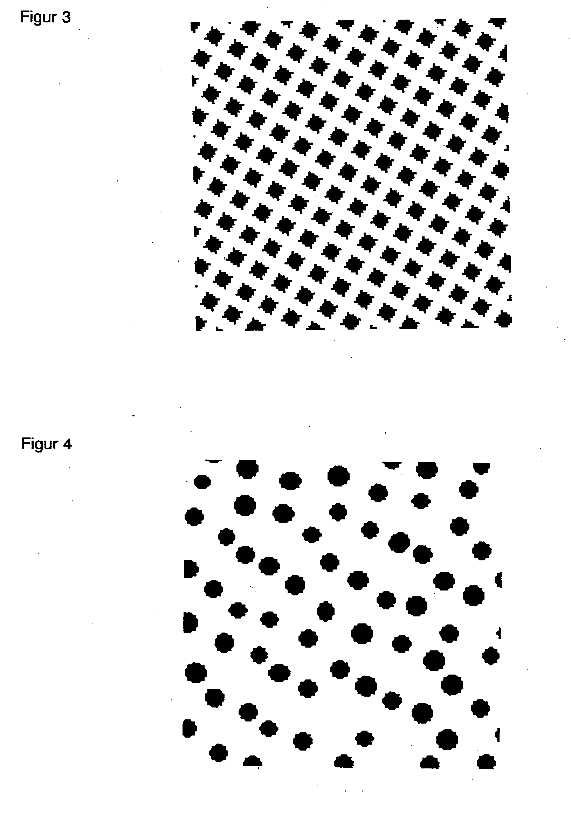

Beispiele für bevorzugte Raster sind in den Figuren 1-4 wiedergegeben. Es zeigen:
- Figur 1: ein autotypisches Punktraster,
- Figur 2: ein autotypisches Rautenraster,
- Figur 3: ein autotypisches Quadrateraster,
- Figur 4: ein amplituden- und frequenzmoduliertes Raster (stochastisches Raster).

Hierbei ist ein autotypisches Raster ein regelmäßiges Raster, bei dem der Mittenabstand der Rasterelemente einen definierten Wert und der Winkel der Rasterachsen einen definierten Wert aufweisen.

Bei einem frequenzmodulierten Raster ist die Größe der Rasterelemente konstant, aber Abstand und Winkel der Elemente variieren statistisch.

Bei einem amplitudenmodulierten Raster variiert die Größe der Rasterelemente statistisch.

Beispielsweise kann die Matrize so graviert werden, dass sie "Näpfchen" (Vertiefungen) aufweist, welche einen Durchmesser von 10 - 500 µm an der Oberfläche der Matrize aufweisen. Vorzugsweise beträgt der Durchmesser 20 - 250 µm und besonders bevorzugt 30 - 150 µm. Der Abstand der Näpfchen beträgt im Allgemeinen 10 - 500 µm, vorzugsweise 20 - 200 µm, besonders bevorzugt 20 - 80 µm. Die Tonwerte des Rasters liegen im Allgemeinen zwischen 3 % und 50 %.

Ganz besonders bevorzugte Raster für Matrizen zur Herstellung von Lederzurichtungen sind wie folgt charakterisiert:
Handelt es sich um ein Negativmatrize, werden für die Erzeugung der Grobstruktur bevorzugt die folgenden Muster in die Oberfläche der Matrize eingraviert:
   Invertierte autotypische Raster mit im Wesentlichen kreisförmiger Rasterpunktform; Rasterpunktdurchmesser bevorzugt von 20 bis 250 µm, besonders bevorzugt 20 bis 80 µm;
   Invertierte frequenzmodulierte oder frequenz- und amplitudenmodulierte Raster mit im Wesentlichen kreisförmiger Rasterpunktform, Rasterpunktdurchmesser bevorzugt von 20 bis 150 µm; Tonwerte bevorzugt 3 bis 40 %, besonders bevorzugt 5 bis 30 %.
Handelt es sich um eine Positivmatrize, werden für die Erzeugung der Grobstruktur bevorzugt die folgenden Muster in die Oberfläche der Matrize eingraviert:
   Autotypische Raster mit im Wesentlichen kreisförmiger Rasterpunktform,
   Rasterpunktdurchmesser bevorzugt von 20 bis 250 µm, besonders 20 bis 80 µm;
   Frequenzmodulierte oder frequenz- und amplitudenmodulierte Raster mit im Wesentlichen kreisförmiger Rasterpunktform, Rasterpunktdurchmesser bevorzugt von 20 bis 150 µm, Tonwerte bevorzugt 3 bis 40 %, besonders bevorzugt 5 bis 30 %.

Die Näpfchen können aber auch einen anderen Querschnitt aufweisen, beispielsweise einen elliptischen oder polygonalen Querschnitt. Die Tiefe der Näpfchen beträgt im Regelfall 20 bis 500 µm, bevorzugt 30 bis 200 µm und besonders bevorzugt 60 bis 200 µm. Eine derartige Matrize wird im Allgemeinen als Negativ-matrize zur Herstellung von Leder-Zurichtungen verwendet. Eine entsprechende Positiv-Matrize kann ebenfalls durch Lasergravur hergestellt werden. Diese weist die beschriebenen Strukturelemente als Erhebungen ("Härchen") auf. Diese weisen den oben beschriebenen Negativ-Strukturelementen (Vertiefungen) entsprechende Abmessungen auf.

Die Matrize weist vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Rauhigkeit im Bereich von 1 bis 20 µm, besonders bevorzugt 2 bis 15 µm und besonders bevorzugt 3 bis 10 µm.

Die Matrize weist vorzugsweise zusätzlich eine raue Oberfläche als Oberflächen-Feinstruktur auf, wobei die Dimensionen der Rauhigkeit der Oberflächen-Feinstruktur kleiner sind als die mittels Laserstrukturierung erzeugten Strukturelemente. Idealerweise ist die Rauhigkeit der Oberfläche der Matrize so ausgebildet, dass die durch Auftragen eines flüssigen Kunststoffmaterials auf die Oberfläche der Matrize und anschließendem Verfestigen des Kunststoffmaterials gebildete Beschichtung einen Glanzgrad nach DIN 67530 bei einem Einstrahlwinkel von 60° von weniger als 2,2 aufweist.

Eine raue Oberflächenstruktur kann entweder vor, während oder nach der Laserstrukturierung erzeugt werden. Beispielsweise kann die laserstrukturierbare Schicht vor dem Verstärkungsprozess mit einer rauen Oberfläche in Kontakt gebracht werden, so dass die Struktur dieser rauen Oberfläche auf der Matrize abgebildet wird, ggf. auch unter Anwendung von Temperatur und/oder Druck. Anschließend wird die Aufzeichnungsschicht wie beschrieben verstärkt.

In einer weiteren Ausführungsform hat es sich als besonders vorteilhaft erwiesen, die Mikrorauhigkeit erst im Zuge der Herstellung der Beschichtung zu erzeugen, beispielsweise mit Hilfe einer speziellen Polyurethandispersion, welche nach der Verfestigung unlösliche Partikel mit einem mittleren Durchmesser von 1 bis 20 µm enthält. In diesem Fall ist es nicht notwendig, die Mikrorauhigkeit mittels Laserstrukturierung zu erzeugen, sondern es genügt, mittels Laser in die Oberfläche der Matrize lediglich Vertiefungen oder Erhebungen der oben beschriebenen Dimensionen einzugravieren. Beschichtungen, die mit solchen Polyurethan-Dispersionen hergestellt werden, sind nur in sehr geringem Maße rückpolierbar, d.h. sie verändern auch bei Reibung etwa durch Benutzung ihren geringen Glanzgrad im Wesentlichen nicht. Solche Polyurethan-Dispersionen sind z.B. unter dem Namen Novomatt GG (BASF Aktiengesellschaft) im Handel erhältlich.

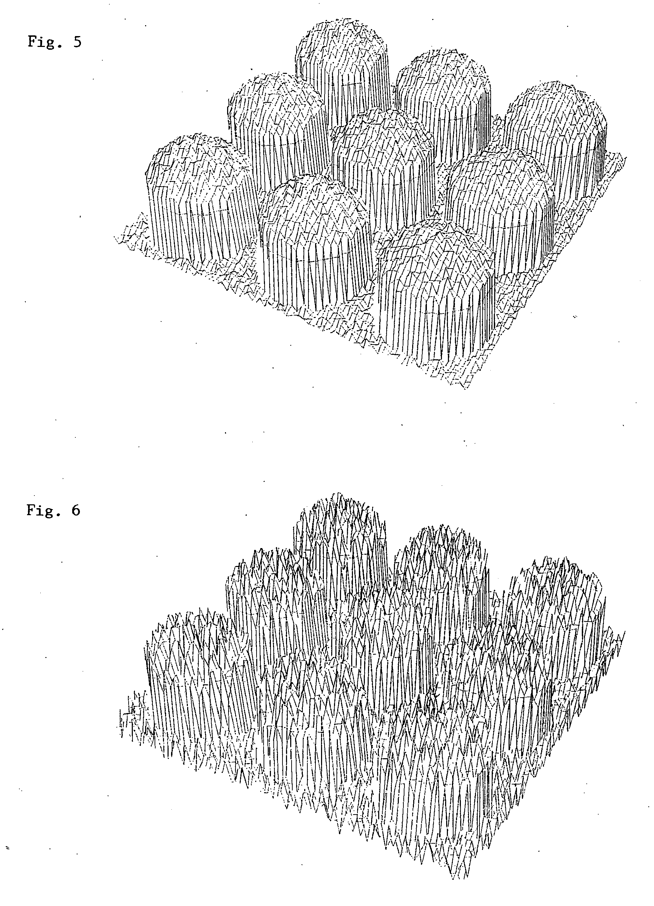

Beispiele für lasergravierte Grob- und Feinstrukturen sind in den Figuren 5-7 wiedergegeben. Es zeigen:
- Figur 5: dicke Härchen mit geringer Rauhigkeit;
- Figur 6: dicke Härchen mit hoher Rauhigkeit;

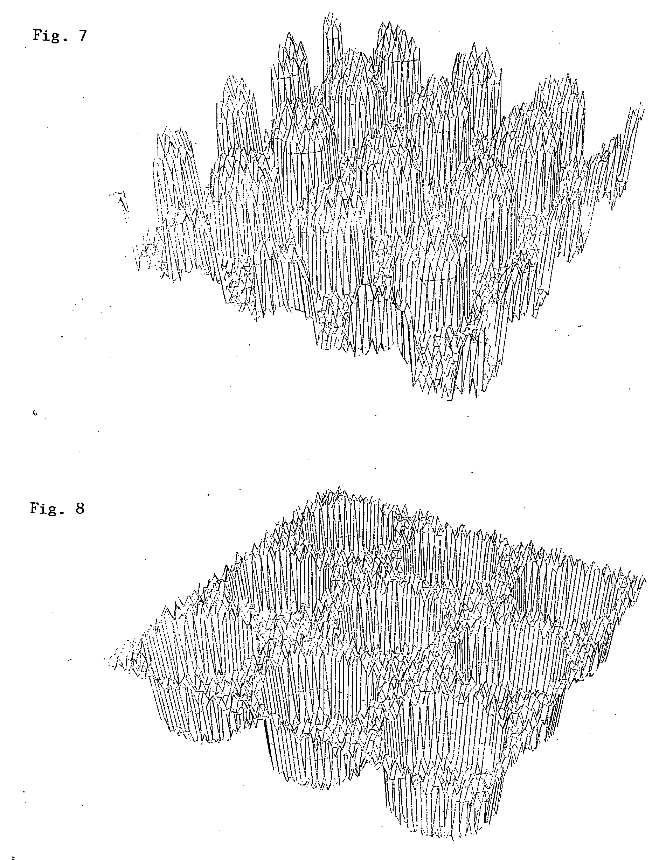

- Figur 7: dünne Härchen mit mittlerer Rauhigkeit;
- Figur 8: dicke Näpfchen mit mittlerer Rauhigkeit.

Weiterhin kann die Rauhigkeit im Zuge der Laserstrukturierung direkt auf der Matrize erzeugt werden, indem einem Muster (Raster) aus groben Strukturelementen zusätzlich ein feineres Muster aus feineren Strukturelementen überlagert wird, z.B. ein Störmuster in Form eines amplituden- /höhenmodulierten Rauschens, ein feines, unregelmäßiges Muster oder ein autotypisches oder frequenzmoduliertes Raster, welches feiner ist als die Grobstruktur. Dies kann mit ein und demselben Laser oder aber auch mit verschiedenen Lasern erfolgen. Beispielsweise kann ein erster Laserstrahl die Grobstruktur in die Matrize eingravieren, während ein zweiter Laserstrahl die Feinstruktur eingraviert. Hierzu können, je nach erforderlicher Auflösung, unterschiedliche Lasertypen (z.B CO₂-Laser und Nd/YAG-Laser) eingesetzt werden. Es können auch Strukturen von Tierhäuten in die Matrizen eingraviert werden.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge zwischen 600 und 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten, quellungsarmen, organischen Reinigungsmitteln ausreichend.

Das Verfahren kann in einem einzigen Produktionsgang ausgeführt werden, bei dem alle Verfahrensschritte nacheinander ausgeführt werden. Vorteilhafterweise kann das Verfahren aber auch nach dem Verstärkungsschritt unterbrochen werden. Die verstärkte Matrize kann konfektioniert und gelagert werden und erst zu einem späteren Zeitpunkt mittels Lasergravur zu einer bebilderten Matrize weiterverarbeitet werden. Hierbei ist es vorteilhaft, die Matrize mit einer temporären Deckfolie, beispielsweise aus PET, zu schützen, die vor der Lasergravur wieder abgezogen wird.

Die hergestellten Matrizen werden u. a. zur Herstellung von oberflächenstrukturierten Zurichtungen für Leder verwendet. Dazu wird auf die Negativmatrize ein flüssiges Kunststoffmaterial aufgebracht und verfestigen gelassen. Aus einer lasergravierten Positivmatrize wird zunächst eine Negativmatrize hergestellt.

Die Herstellung von mit einer Oberflächenstruktur versehenen Kunststoffschichten zur Beschichtung von Leder unter Verwendung der laserstrukturierten Matrizen umfasst die Schritte:
i) Herstellung einer Negativmatrize durch Lasergravur,
ii) Aufbringen eines flüssigen Kunststoffmaterials auf die strukturierte Oberfläche der Negativmatrize und Verfestigen lassen des Kunststoffmaterials.

Geeignete flüssige Kunststoffmaterialien sind Kunststoffdispersionen, vorzugsweise lösungsmittelfreie, wässrige Kunststoffdispersionen, besonders bevorzugt wässrige Polyurethandispersionen. Die Kunststoffdispersionen können Mikrohohlkugeln enthalten, welche in der Zurichtung geschlossene Zellen bilden. Spezielle Kunststoffdispersionen, die zur Herstellung von Zurichtungen für Leder geeignet sind, sind in der WO 2005/035795 offenbart.

Die Kunststoffzusammensetzung kann auf die Matrize beispielsweise aufgesprüht oder aufgerakelt werden.

Bei Verwendung einer Positivmatrize weist das Verfahren die nachstehenden Schritte auf:
i) Herstellung einer Positivmatrize durch Lasergravur,
ii) Aufbringen einer Polymer-Zusammensetzung auf die strukturierte Oberfläche der Positivmatrize und fotochemische, thermochemische oder aktinische Verstärkung der Zusammensetzung, wobei eine elastomere Negativmatrize erhalten wird,
iii) Aufbringen eines flüssigen Kunststoffmaterials auf die strukturierte Oberfläche der Negativmatrize und Verfestigen lassen der Kunststoffdispersion.

Bevorzugt wird ein Silikonkautschuk auf die Oberfläche der Positivmatrize aufgebracht.

Das Verfahren zum Zurichten von Leder umfasst die Schritte:
i) Herstellung einer Negativmatrize,
ii) Aufbringen eines flüssigen Kunststoffmaterials auf die strukturierte Oberfläche der Negativmatrize und Verfestigen lassen des Kunststoffmaterials, oder
i) Herstellung einer Positivmatrize, und
ii) Aufbringen einer Polymer-Zusammensetzung auf die strukturierte Oberfläche der Positivmatrize und fotochemische, thermochemische oder aktinische Verstärkung der Zusammensetzung, wobei eine elastomere Negativmatrize erhalten wird, und
iii) Aufbringen eines flüssigen Kunststoffmaterials auf die strukturierte Oberfläche der Negativmatrize und Verfestigen lassen der Kunststoffdispersion,
   wobei jeweils eine eine Oberflächenstruktur aufweisende Kunststoffschicht erhalten wird, und
iv) Verbinden der Kunststoffschicht mit der von der oberflächenstrukturierten Seite abgewandten Seite mit der Oberfläche des Leders, wobei die Verbindung durch eine oder mehrere weitere Schichten bewirkt wird.

Der Schritt iv) kann wie in der WO 2005/047549 beschrieben durchgeführt werden. Dementsprechend wird ein an seiner Sichtseite mit einer eine Narbenstruktur aufweisenden Zurichtung versehener Träger, insbesondere ein Narbenleder, eines Spaltleder mit geschliffener Oberseite oder ein synthetisches Veloursmaterial mit einer aus Mikrofasern bestehenden Oberseite, hergestellt, wobei zunächst zur Bildung der Zurichtung eine wässrige Kunststoffdispersion auf die Matrize, welche eine der Narbenstruktur der Zurichtung entsprechende strukturierte Oberfläche aufweist, aufgebracht und zu einem Film verfestigen gelassen wird. Auf die Oberseite des Trägers wird eine eine Verbindungsschicht bildende Kunststoffdispersion aufgetragen, und der Träger mit dieser Oberseite auf den Film aufgelegt und einer Druck- und Wärmebehandlung unterzogen.

Die Erfindung wird durch die nachstehenden Beispiele näher erläutert.

### Beispiel 1

Es wurde eine lasergravierbare Silikonpolymerschicht mit einer glatten Oberfläche auf Basis eines raumtemperaturhärtenden füllstoffhaltigen 2-Komponenten-Silikonelastomers hergestellt, indem die beiden Komponenten intensiv miteinander vermischt und mit Hilfe einer Rakelbeschichtung auf eine temporäre PET-Deckfolie aufgebracht wurden. Die Silikonschicht wurde 16 Stunden bei Raumtemperatur aushärten gelassen und die so chemisch verstärkte elastomere Silikonschicht mit Hilfe eines Silikonklebers auf einem Polyestergewebe als Trägerelement fixiert. Die nach Entfernung der temporären PET-Deckfolie erhaltene verstärkte elastomere Polymerschicht mit Gewebeträger wies eine Gesamtschichtdicke von 1,7 mm auf. Der erhaltende Schichtverbund wurde vor der anschließenden Strukturierung mittels Laser in Plattenstücke von ca. 40 x 100 cm konfektioniert.

### Beispiel 2

Es wurde eine lasergravierbare Schicht mit einer rauen Oberfläche auf Basis eines raumtemperaturhärtenden füllstoffhaltigen 2-Komponenten-Silikonelastomers hergestellt, indem die beiden Komponenten intensiv miteinander vermischt und mit Hilfe einer Rakelbeschichtung auf eine temporäre mikroraue PET-Deckfolie aufgebracht wurden. Nach 16-stündigem Aushärten bei Raumtemperatur wurde die chemisch verstärkte elastomere Silikonschicht mit Hilfe eines Silikonklebers auf einem Polyestergewebe als Trägerelement fixiert. Die nach Entfernung der temporären mikrorauen PET-Deckfolie erhaltene verstärkte elastomere Schicht mit Gewebeträger wies eine Gesamtschichtdicke von 1,7 mm auf. Der erhaltende Schichtverbund wurde vor der anschließenden Strukturierung mittels Laser in Plattenstücke von ca. 40 x 100 cm konfektioniert.

### Beispiel 3

Als lasergravierbare Schicht wurde eine handelsübliche laserstrukturierbare Flexodruckplatte (nyloflex^{®} LD1, BASF Drucksysteme GmbH) mit einer Gesamtschichtdicke von 1,14 mm auf einem PET-Folienträger mit einer Schichtstärke von 0,125 mm eingesetzt.

In den folgenden Beispielen wurde zur Strukturierung der lasergravierbaren Schicht eine CO₂-Lasergravurmaschine vom Typ BDE 4131 (Fa. Stork Prints Austria GmbH, Kufstein) verwendet. Die Maschine verfügt über 3 sealed CO₂-Laser mit einer Nennleistung von je 250 W, den entsprechenden optischen Komponenten sowie der zugehörigen Peripherie zur Steuerung, Laserkühlung, Ablufterfassung und Abluftbehandlung. Das zylindrische Aufnahmesystem besteht entweder aus einer dünnwandigen zylindrischen Metalltrommel oder aus Metallkonen, in die ein sog. Drucksleeve, bestehend aus einem (meist mehrschichtig aufgebauten) zylindrischen Hohlzylinder aus einem oder mehreren Kunststoffen, eingespannt wird. Die Lasersteuerung erfolgt über einen verbundenen Steuerrechner mittels einer speziellen Ausgabesoftware. Die Ausgabesoftware interpretiert das als Graustufen-Bitmap vorliegende Motiv als pixelweises Höhenprofil. Jede Graustufe entspricht einer bestimmten Gravurtiefe bzw. Gravurleistung am betreffenden Punkt des Motivs. Idealerweise ist der Zusammenhang zwischen Graustufenwert und Gravurtiefe ungefähr linear eingestellt.

Die unbearbeitete Matrize liegt als plane Schicht vor und wird auf dem zylindrischen Aufnahmeelement für die Dauer der Gravur fixiert. Während des Gravurprozesses wird das rotierende zylindrische Aufnahmeelement mit der zu bearbeitenden Matrize gleichförmig relativ zum Laserstrahl in axialer Richtung verschoben. Auf diese Weise überstreicht der Laserstrahl die gesamte zu bearbeitende Fläche der Matrize.

Die Matrize gemäß Beispiel 1 wurde mit einem Motiv graviert, das aus einer Kombination aus den folgenden beiden Einzelmotiven bestand:

| Motiv Nr. | Funktion | Motivtyp |
|---|---|---|
| 1 | Näpfchen | Näpfchen mit |
| | | Durchmesser = 72 µm |
| | | Mittenabstand = 100 µm |
| | | (in Form eines invertierten autotypischen Rasters von 100 l/cm = 254 lpi bei einem Tonwert von 40 %) |
| 2 | Mikrorauhigkeit | Rauhigkeitsmuster mit |
| | | Rauhigkeitsamplitude = 30 µm |
| | | Rauhigkeitsfrequenz = 30 µm |

| | | |
|---|---|---|
| Ipi = lines per inch | | |

Auf diese Weise wurde eine Matrize mit rauer Oberfläche und ca. 10000 Näpfchen / cm² erhalten. Die Tiefe der gravierten Näpfchen betrug ca. 80 µm. Die erhaltene Matrize wurde mit Hilfe einer Wasser-Tensid-Mischung nachgereinigt und direkt für den Abformvorgang eingesetzt. Hierzu wurde gemäß WO 2005/035795 eine wässrige, Mikrohohlkugeln enthaltende Kunststoffdispersion auf die Matrize aufgebracht und durch Entfernen des Wassers verfestigt. Die so erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch ansprechende, velours- bzw. nubukartige, matte Oberfläche mit angenehmem Griff.

### Beispiel 4

In die bereits raue Oberfläche des Aufzeichnungselements gemäß Beispiel 2 wurde folgendes Motiv graviert:

| Motiv Nr. | Funktion | Motivtyp |
|---|---|---|
| 1 | Näpfchen | Näpfchen |
| | | Durchmesser = 86 µm |
| | | Mittenabstand = 129 µm |
| | | (in Form eines invertierten regelmäßigen Rasters von 78 l/cm = 197 Ipi bei einem Tonwert von 35%) |

Auf diese Weise wurde eine Matrize mit rauer Oberfläche und ca. 6000 Näpfchen / cm² erhalten. Die Tiefe der gravierten Näpfchen betrug ca. 120 µm. Die erhaltene Matrize wurde mit Hilfe einer Wasser-Tensid-Mischung nachgereinigt und direkt für den Abformvorgang eingesetzt. Hierzu wurde gemäß WO 2005/035795 eine wässrige, Mikrohohlkugeln enthaltende Kunststoffdispersion auf die Matrize aufgebracht und durch Entfernen des Wassers verfestigt. Die so erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch ansprechende, velours- bzw. nubukartige, matte Oberfläche mit sehr angenehmem Griff.

### Beispiel 5

Als lasergravierbare Schicht wurde eine handelsübliche laserstrukturierbare Flexodruckplatte (nyloflex^{®} LD1, BASF Drucksysteme GmbH) mit einer Gesamtschichtdicke von 1,14 mm auf einem PET-Folienträger mit einer Schichtstärke von 0,125 mm eingesetzt.

Die Matrize wurde mit einem Motiv graviert, das aus einer Kombination aus den folgenden beiden Einzelmotiven bestand:

| Motiv Nr. | Funktion | Motivtyp |
|---|---|---|
| 1 | Härchen | Härchen |
| | | Durchmesser = 72 µm |
| | | Mittenabstand = 114 µm |
| | | (in Form eines autotypischen Rasters von 88 l/cm = 223 Ipi bei einem Tonwert von 31 %) |
| 2 | Mikrorauhigkeit | Rauhigkeitsmuster |
| | | Rauhigkeitsamplitude = 30 µm |
| | | Rauhigkeitsfrequenz = 30 µm |

Auf diese Weise wurde eine Positiv-Matrize mit rauer Oberfläche und ca. 7500 Näpfchen/cm² erhalten. Die Höhe der nach der Gravur übrig bleibenden Härchen betrug ca. 100 µm. Die erhaltene Matrize wurde mit Hilfe eines nicht. quellenden, organischen Reinigungsmittels nachgereinigt. Mit Hilfe eines raumtemperaturhärtenden füllstoffhaltigen 2-Komponenten-Silikonelastomers wurde von der Positiv-Matrize eine Negativ-Matrize hergestellt, indem die beiden Komponenten des Silikonelastomers intensiv miteinander vermischt und das Gemisch mit Hilfe einer Rakelbeschichtung auf die Positiv-Matrize aufgebracht wurden. Nach dem Aushärten bei Raumtemperatur für eine Dauer von 16 Stunden wurde die entsprechende Negativ-Matrize für die anschließende Herstellung der Kunststoffbeschichtung erhalten.

Gemäß WO 2005/035795 wurde eine wässrige, Mikrohohlkugeln enthaltende Kunststoffdispersion auf die Negativ-Matrize aus Silikon aufgebracht und durch Entfernen des Wassers verfestigt. Die so erhaltene Kunststoff-Beschichtung wurde gemäß WO2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch ansprechende, veloursartige, überwiegend matte Oberfläche mit angenehmem Griff.

### Beispiel 6:

Das Aufzeichnungselement gemäß Beispiel 5 wurde mit einem Motiv graviert, das aus einer Kombination aus den folgenden beiden Einzelmotiven bestand:

| Motiv Nr. | Funktion | Motivtyp |
|---|---|---|
| 1 | Härchen | Härchen |
| | | Durchmesser = 43 µm |
| | | Mittenabstand = 100 µm |
| | | (in Form eines regelmäßigen Rasters von 100 l/cm = 254 Ipi bei einem Tonwert von 14%) |
| 2 | Mikrorauhigkeit | Rauhigkeitsmuster |
| | | Rauhigkeitsamplitude = 40 µm |
| | | Rauhigkeitsfrequenz = 40 µm |

Auf diese Weise wurde eine Positiv-Matrize mit rauer Oberfläche und ca. 10000 Näpfchen/cm² erhalten. Die Höhe der nach der Gravur übrig bleibenden Härchen betrug ca. 80 µm. Die erhaltene Matrize wurde mit Hilfe eines nicht quellenden, organischen Reinigungsmittels nachgereinigt. Mit Hilfe eines raumtemperaturhärtenden füllstoffhaltigen 2-Komponenten-Silikonelastomers wurde von der Positiv-Matrize eine Negativ-Matrize hergestellt, indem die beiden Komponenten intensiv miteinander vermischt und mit Hilfe einer Rakelbeschichtung auf die Positiv-Matrize aufgebracht wurden. Nach dem Aushärten bei Raumtemperatur für eine Dauer von 16 Stunden wurde die entsprechende Negativ-Matrize für die anschließende Herstellung der Kunststoffbeschichtung erhalten. Gemäß WO 2005/035795 wurde eine wässrige, Mikrohohlkugeln enthaltende Kunststoffdispersion auf die Negativ-Matrize aus Silikon aufgebracht und durch Entfernen des Wassers verfestigt. Die so erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch ansprechende, veloursartige, matte Oberfläche mit angenehmem Griff.

### Beispiel 7:

Das Aufzeichnungselement gemäß Beispiel 5 wurde mit einem Motiv graviert, das lediglich aus einem Einzelmotiv für die erfindungsgemäßen Erhöhungen (Härchen) bestand:

| Motiv Nr. | Funktion | Motivtyp |
|---|---|---|
| 1 | Härchen | Härchen |
| | | Durchmesser = 57 µm |
| | | Mittenabstand = 100 µm |
| | | (in Form eines regelmäßigen Rasters von 100 l/cm = 254 Ipi bei einem Tonwert von 26%) |

Auf diese Weise wurde eine Positiv-Matrize ohne zusätzliche Mikrorauhigkeit mit ca. 10000 Näpfchen/cm² erhalten. Die Höhe der nach der Gravur übrig bleibenden Härchen betrug ca. 80 µm. Die erhaltene Matrize wurde mit Hilfe eines nicht quellenden, organischen Reinigungsmittels nachgereinigt. Mit Hilfe eines raumtemperaturhärtenden füllstoffhaltigen 2-Komponenten-Silikonelastomers wurde von der Positiv-Matrize eine Negativ-Matrize hergestellt, indem die beiden Komponenten intensiv miteinander vermischt und mit Hilfe einer Rakelbeschichtung auf die Positiv-Matrize aufgebracht wurden. Nach dem Aushärten bei Raumtemperatur für eine Dauer von 16 Stunden wurde die entsprechende Negativ-Matrize für die anschließende Herstellung der Kunststoff-beschichtung erhalten.

Anschließend wurde in Anlehnung an WO 2005/035795 eine wässrige, Mikrohohlkugeln enthaltende Kunststoffdispersion auf die Negativ-Matrize aus Silikon aufgebracht, wobei als Polyurethandispersion-Komponente Novomatt GG (BASF Aktiengesellschaft) verwendet wurde. Die nach Entfernen des Wassers bei 80°C erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch äußerst ansprechende, veloursartige, stark matte Oberfläche mit sehr angenehmem Griff.

## Patentansprüche

1. Verfahren zum Zurichten von Leder, umfassend die Schritte:
i) Herstellung einer Negativmatrize, wobei die Oberflächenstruktur der Matrize Strukturelemente aufweist, die als Vertiefungen oder Erhebungen ausgebildet sind mit einem Durchmesser im Bereich von 10 bis 500 µm, einer Tiefe bzw. Höhe im Bereich von 20 bis 500 µm und einem Abstand im Bereich von 10 bis 500 µm, wobei die Strukturelemente auf der Oberfläche der Matrize ein autotypisches Raster, ein amplitudenmoduliertes Raster, ein frequenzmodulertes Raster oder ein stochastisches Raster bilden und diese Strukturelemente durch Lasergravur erzeugt werden,
ii) Aufbringen eines flüssigen Kunststoffmaterials auf die strukturierte Oberfläche der Negativmatrize und Verfestigenlassen des Kunststoffmaterials,
oder
i) Herstellung einer Positivmatrize, wobei die Oberflächenstruktur der Matrize Strukturelemente aufweist, die als Vertiefungen oder Erhebungen ausgebildet sind mit einem Durchmesser im Bereich von 10 bis 500 µm, einer Tiefe bzw. Höhe im Bereich von 20 bis 500 µm und einem Abstand im Bereich von 10 bis 500 µm, wobei die Strukturelemente auf der Oberfläche der Matrize ein autotypisches Raster, ein amplitudenmoduliertes Raster, ein frequenzmodulertes Raster oder ein stochastisches Raster bilden und diese Strukturelemente durch Lasergravur erzeugt werden,
ii) Aufbringen einer Polymer-Zusammensetzung auf die strukturierte Oberfläche der Positivmatrize und Verfestigenlassen derselben, wobei eine elastomere Negativmatrize erhalten wird, und
iii) Aufbringen eines flüssigen Kunststoffmaterials auf die strukturierte Oberfläche der Negativmatrize und Verfestigenlassen des Kunststoffmaterials,
wobei jeweils eine eine Oberflächenstruktur aufweisende Kunststoffschicht erhalten wird, und
iv) Verbinden der Kunststoffschicht mit der von der oberflächenstrukturierten Seite abgewandten Seite mit der Oberfläche des Leders, wobei die Verbindung durch eine oder mehrere weitere Schichten bewirkt wird.

2. Verfahren nach Anspruch 1, **dadurch gekennzeichnet, dass** die Herstellung der Negativ- bzw. Positivmatrize die Schritte umfasst:
a) Bereitstellen einer lasergravierbaren elastomeren Schicht oder eines Schichtverbunds umfassend eine lasergravierbare elastomere Schicht, gegebenenfalls auf einem Träger, wobei die lasergravierbare Schicht ein Bindemittel sowie weitere Zusatz- und Hilfsstoffe umfasst,
b) thermochemische, photochemische oder aktinische Verstärkung der lasergravierbaren elastomeren Schicht,
c) Eingravieren einer der Oberflächenstruktur der Zurichtung entsprechenden Oberflächenstruktur der Matrize in die lasergravierbare elastomere Schicht mit einem Laser.

3. Verfahren nach Anspruch 1 oder 2, **dadurch gekennzeichnet, dass** die Oberflächenstruktur der Matrize in Schritt c) erzeugt wird, indem die lasergravierbare Schicht oder der Schichtverbund auf einen Zylinder aufgebracht und der Zylinder in Rotation versetzt wird, und der Zylinder in axialer Richtung bewegt und der Laser entsprechend der Bewegung des Zylinders elektronisch gesteuert moduliert wird.

4. Verfahren nach Anspruch 1 oder 2, **dadurch gekennzeichnet, dass** die Oberflächenstruktur der Matrize in Schritt c) erzeugt wird, indem die lasergravierbare Schicht oder der Schichtverbund plan angeordnet werden und lasergravierbare Schicht und Laser in der Ebene der Schicht bzw. des Schichtverbundes relativ zueinander bewegt werden, und der Laser entsprechend der Relativbewegung elektronisch gesteuert moduliert wird.

5. Verfahren nach einem der Ansprüche 1 bis 4, **dadurch gekennzeichnet, dass** das Eingravieren der Oberflächenstruktur der Matrize mit einem IR-Laser erfolgt.

6. Verfahren nach einem der Ansprüche 1 bis 5, **dadurch gekennzeichnet, dass** die Strukturelemente ausgewählt sind aus Kreisen, Ellipsen, Quadraten, Rauten, Dreiecken, Sternen sowie weiteren einfachen geometrischen Formen.

7. Verfahren nach einem der Ansprüche 1 bis 6, **dadurch gekennzeichnet, dass** die Matrize neben einer Oberflächen-Grobstruktur eine Oberflächen-Feinstruktur aufweist.

8. Verfahren nach Anspruch 7, **dadurch gekennzeichnet, dass** die Oberflächen-Feinstruktur eine Mikrorauigkeit mit einer Rauigkeitsamplitude im Bereich von 1 bis 30 µm und einer Rauigkeitsfrequenz im Bereich von 0,5 bis 30 µm ist.

9. Verfahren nach Anspruch 8, **dadurch gekennzeichnet, dass** sowohl Grob- als auch Feinstruktur durch Lasergravur erzeugt werden.

10. Verwendung einer Negativ- oder Positivmatrize, die erhältlich ist durch
a) Bereitstellen einer lasergravierbaren elastomeren Schicht oder eines Schichtverbunds umfassend eine lasergravierbare elastomere Schicht, gegebenenfalls auf einem Träger, wobei die lasergravierbare Schicht ein Bindemittel sowie weitere Zusatz- und Hilfsstoffe umfasst,
b) thermochemische, photochemische oder aktinische Verstärkung der lasergravierbaren elastomeren Schicht,
c) Eingravieren einer der Oberflächenstruktur der Zurichtung entsprechenden Oberflächenstruktur der Matrize in die lasergravierbare elastomere Schicht mit einem Laser,
wobei die Oberflächenstruktur der Matrize Strukturelemente aufweist, die als Vertiefungen oder Erhebungen ausgebildet sind mit einem Durchmesser im Bereich von 10 bis 500 µm, einer Tiefe bzw. Höhe im Bereich von 20 bis 500 µm und einem Abstand im Bereich von 10 bis 500 µm, wobei die Strukturelemente auf der Oberfläche der Matrize ein autotypisches Raster, ein amplitudenmoduliertes Raster, ein frequenzmodulertes Raster oder ein stochastisches Raster bilden, in einem Verfahren zum Zurichten von Leder.

11. Verwendung nach Anspruch 10, **dadurch gekennzeichnet, dass** die Strukturelemente ausgewählt sind aus Kreisen, Ellipsen, Quadraten, Rauten, Dreiecken, Sternen sowie weiteren einfachen geometrischen Formen.

12. Verwendung nach Anspruch 10 oder 11, **dadurch gekennzeichnet, dass** die Matrize neben einer Oberflächen-Grobstruktur eine Oberflächen-Feinstruktur aufweist.

13. Verwendung nach Anspruch 12, **dadurch gekennzeichnet, dass** die Oberflächen-Feinstruktur eine Mikrorauigkeit mit einer Rauigkeitsamplitude im Bereich von 1 bis 30 µm und einer Rauigkeitsfrequenz im Bereich von 0,5 bis 30 µm ist.

14. Zugerichtetes Leder, enthaltend eine mit der Oberfläche des Leders verbundene, eine Oberflächenstruktur aufweisende, Kunststoffschicht, wobei die Verbindung durch eine oder mehrere weitere Schichten bewirkt wird, dadurch charakterisiert, daß es nach einem der Verfahren gemäß einem der Ansprüche 1 bis 9 hergestellt ist.

## Claims

1. A process for the finishing of leather, comprising the steps:
i) producing a negative die, wherein the surface structure of the die includes structural elements which are formed as depressions or elevations with a diameter in the range from 10 to 500 µm, a depth/ height in the range from 20 to 500 µm and a spacing in the range from 10 to 500 µm, wherein the structural elements on the surface of the die form an autotypical screen, an amplitude-modulated screen, a frequency-modulated screen or a stochastic screen and these structural elements are produced by laser engraving,
ii) applying a liquid plastic material to the structured surface of the negative die and allowing the plastic material to solidify,
or
i) producing a positive die, wherein the surface structure of the die includes structural elements which are formed as depressions or elevations with a diameter in the range from 10 to 500 µm, a depth/ height in the range from 20 to 500 µm and a spacing in the range from 10 to 500 µm, wherein the structural elements on the surface of the die form an autotypical screen, an amplitude-modulated screen, a frequency-modulated screen or a stochastic screen and these structural elements are produced by laser engraving,
ii) applying a polymer composition to the structured surface of the positive die and allowing said composition to solidify, an elastomeric negative die being obtained, and
iii) applying a liquid plastic material to the structured surface of the negative die and allowing the plastic material to solidify
in each case a plastics layer having a surface structure being obtained, and
iv) bonding the plastics layer on the side facing away from the surface-structured side to the surface of the leather, the bond being produced by one or more further layers.

2. The process according to claim 1, wherein the production of the negative or positive die comprises the steps:
a) provision of a laser-engravable elastomeric layer or of a layer composite comprising a laser-engravable elastomeric layer, optionally on a substrate, the laser-engravable layer comprising a binder and further additives and assistants,
b) thermochemical, photochemical or actinic reinforcement of the laser-engravable elastomeric layer,
c) engraving of a die surface structure corresponding to the surface structure of the finish into the laser-engravable elastomeric layer using a laser.

3. The process according to claim 1 or 2, wherein the surface structure of the die in step c) is produced by applying the laser-engravable layer or the layer composite to a cylinder and causing the cylinder to rotate, and moving the cylinder in the axial direction and modulating the laser under electronic control according to the movement of the cylinder.

4. The process according to claim 1 or 2, wherein the surface structure of the die in step c) is produced by arranging the laser-engravable layer or the layer composite in a planar manner and moving the laser-engravable layer and laser relative to one another in the plane of the layer or of the layer composite, and modulating the laser under electronic control according to the relative movement.

5. The process according to any of claims 1 to 4, wherein the engraving of the surface structure of the die is effected using an IR laser.

6. The process according to any of claims 1 to 5, wherein the structure elements are selected from circles, ellipses, squares, rhombuses, triangles, stars and further simple geometric shapes.

7. The process according to any of claims 1 to 6, wherein the die has a fine surface structure in addition to a coarse surface structure.

8. The process according to claim 7, wherein the surface fine structure has a microroughness with a roughness amplitude in the range from 1 to 30 µm and a roughness frequency in the range from 0.5 to 30 µm.

9. The process according to claim 8, wherein both coarse and fine structure are produced by laser engraving.

10. The use of a negative or positive die, obtainable by
a) provision of a laser-engravable elastomeric layer or of a layer composite comprising a laser-engravable elastomeric layer, optionally on a substrate, the laser-engravable layer comprising a binder and further additives and assistants,
b) thermochemical, photochemical or actinic reinforcement of the laser-engravable elastomeric layer,
c) engraving of a die surface structure corresponding to the surface structure of the finish into the laser-engravable elastomeric layer using a laser,
wherein the surface structure of the die includes structural elements which are formed as depressions or elevations with a diameter in the range from 10 to 500 µm, a depth/height in the range from 20 to 500 µm and a spacing in the range from 10 to 500 µm, wherein the structural elements on the surface of the die form an autotypical screen, an amplitude-modulated screen, a frequency-modulated screen or a stochastic screen, in a process for the finishing of leather.

11. The use according to claim 10, wherein the structural elements are selected from circles, ellipses, squares, rhombuses, triangles, stars and further simple geometric shapes.

12. The use according to claim 10 or 11, wherein the die has a surface fine structure in addition to a surface coarse structure.

13. The use according to claim 12, wherein the surface fine structure has a microroughness with a roughness amplitude in the range from 1 to 30 µm and a roughness frequency in the range from 0.5 to 30 µm.

14. Finished leather comprising a plastics layer bonded to the surface of the leather and having a surface structure, wherein the bonding is brought about by one or more further layers, **characterized in that** it is produced by the process according to any one of claims 1 to 9.

## Revendications

1. Procédé de corroyage du cuir, comprenant les étapes :
i) préparation d'une matrice négative, la structure de surface de la matrice présentant des éléments de structure réalisés sous forme de creux ou d'élévations, présentant un diamètre dans la plage de 10 à 500 µm, une profondeur ou, selon le cas, une hauteur dans la plage de 20 à 500 µm et une distance dans la plage de 10 à 500 µm, les éléments de structure formant, à la surface de la matrice, une trame autotypique, une trame modulée en amplitude, une trame modulée en fréquence ou une trame stochastique et ces éléments de structure étant produits par gravure au laser,
ii) application d'un matériau synthétique liquide sur la surface structurée de la matrice négative et on laisse se solidifier le matériau synthétique,
ou
i) préparation d'une matrice positive, la structure de surface de la matrice présentant des éléments de structure réalisés sous forme de creux ou d'élévations, présentant un diamètre dans la plage de 10 à 500 µm, une profondeur ou, selon le cas, une hauteur dans la plage de 20 à 500 µm et une distance dans la plage de 10 à 500 µm, les éléments de structure formant, à la surface de la matrice, une trame autotypique, une trame modulée en amplitude, une trame modulée en fréquence ou une trame stochastique et ces éléments de structure étant produits par gravure au laser,
ii) application d'une composition polymère sur la surface structurée de la matrice positive et on laisse se solidifier celle-ci, une matrice négative élastomère étant obtenue, et
iii) application d'un matériau synthétique liquide sur la surface structurée de la matrice négative et on laisse se solidifier le matériau synthétique,
une couche en matériau synthétique, présentant une structure de surface étant à chaque fois obtenue, et
iv) assemblage de la couche en matériau synthétique, avec sa face opposée à la face structurée en surface, avec la surface du cuir, l'assemblage étant produit par une ou plusieurs autres couches.

2. Procédé selon la revendication 1, **caractérisé en ce que** la préparation de la matrice négative ou, selon le cas, positive comprend les étapes :
a) mise à disposition d'une couche élastomère pouvant être gravée au laser ou d'un composite à couches, comprenant une couche élastomère pouvant être gravée au laser, le cas échéant sur un support, la couche pouvant être gravée au laser comprenant un liant ainsi que d'autres additifs et adjuvants,
b) renforcement thermochimique, photochimique ou actinique de la couche élastomère pouvant être gravée au laser,
c) gravure, à l'aide d'un laser, d'une structure de surface de la matrice, correspondant à la structure de surface du corroyage, dans la couche élastomère pouvant être gravée au laser.

3. Procédé selon la revendication 1 ou 2, **caractérisé en ce que** la structure de surface de la matrice dans l'étape c) est obtenue **en ce que** la couche pouvant être gravée au laser ou le composite à couches est appliqué sur un cylindre et le cylindre est mis en rotation et le cylindre est déplacé dans le sens axial et le laser est modulé par commande électronique en fonction du mouvement du cylindre.

4. Procédé selon la revendication 1 ou 2, **caractérisé en ce que** la structure de surface de la matrice dans l'étape c) est obtenue **en ce que** la couche pouvant être gravée au laser ou le composite à couches est disposé à plat et la couche pouvant être gravée au laser et le laser sont déplacés l'un par rapport à l'autre dans le plan de la couche ou, selon le cas, du composite à couches et le laser est modulé par commande électronique en fonction du mouvement relatif.

5. Procédé selon l'une quelconque des revendications 1 à 4, **caractérisé en ce que** la gravure dans la structure de surface de la matrice est réalisée avec un laser à IR.

6. Procédé selon l'une quelconque des revendications 1 à 5, **caractérisé en ce que** les éléments de structure sont choisis parmi les cercles, les ellipses, les carrés, les losanges, les triangles, les étoiles ainsi que d'autres formes géométriques simples.

7. Procédé selon l'une quelconque des revendications 1 à 6, **caractérisé en ce que** la matrice présente, outre une structure grossière de surface, une structure fine de surface.

8. Procédé selon la revendication 7, **caractérisé en ce que** la structure fine de surface est une microrugosité d'une amplitude de rugosité dans la plage de 1 à 30 µm et d'une fréquence de rugosité dans la plage de 0,5 à 30 µm.

9. Procédé selon la revendication 8, **caractérisé en ce que** tant la structure grossière que la structure fine sont produites par gravure au laser.

10. Utilisation d'une matrice négative ou positive, qui peut être obtenue par
a) mise à disposition d'une couche élastomère pouvant être gravée au laser ou d'un composite à couches, comprenant une couche élastomère pouvant être gravée au laser, le cas échéant sur un support, la couche pouvant être gravée au laser comprenant un liant ainsi que d'autres additifs et adjuvants,
b) renforcement thermochimique, photochimique ou actinique de la couche élastomère pouvant être gravée au laser,
c) gravure, à l'aide d'un laser, d'une structure de surface de la matrice, correspondant à la structure de surface du corroyage, dans la couche élastomère pouvant être gravée au laser,
la structure de surface de la matrice présentant des éléments de structure réalisés sous forme de creux ou d'élévations, présentant un diamètre dans la plage de 10 à 500 µm, une profondeur ou, selon le cas, une hauteur dans la plage de 20 à 500 µm et une distance dans la plage de 10 à 500 µm, les éléments de structure formant, à la surface de la matrice, une trame autotypique, une trame modulée en amplitude, une trame modulée en fréquence ou une trame stochastique dans un procédé de corroyage du cuir.

11. Utilisation selon la revendication 10, **caractérisée en ce que** les éléments de structure sont choisis parmi les cercles, les ellipses, les carrés, les losanges, les triangles, les étoiles ainsi que d'autres formes géométriques simples.

12. Utilisation selon la revendication 10 ou 11, **caractérisée en ce que** la matrice présente, outre une structure grossière de surface, une structure fine de surface.

13. Utilisation selon la revendication 12, **caractérisée en ce que** la structure fine de surface est une microrugosité d'une amplitude de rugosité dans la plage de 1 à 30 µm et d'une fréquence de rugosité dans la plage de 0,5 à 30 µm.

14. Cuir corroyé, contenant une couche en matériau synthétique assemblée avec la surface du cuir, présentant une structure de surface, l'assemblage étant produit par une ou plusieurs autres couches, **caractérisé en ce qu'**il est préparé selon l'un des procédés selon l'une quelconque des revendications 1 à 9.
